(19) Europäisches Patentamt
European Patent Office
Office européen des brevets

(11) **EP 4 570 080 A1**

(12) **EUROPEAN PATENT APPLICATION**
published in accordance with Art. 153(4) EPC

(43) Date of publication:
**18.06.2025 Bulletin 2025/25**

(21) Application number: **23868210.8**

(22) Date of filing: **20.09.2023**

(51) International Patent Classification (IPC):
**A23L 5/00** (2016.01)   **A23C 9/123** (2006.01)

(52) Cooperative Patent Classification (CPC):
**A23C 9/123; A23L 5/00**

(86) International application number:
**PCT/JP2023/034074**

(87) International publication number:
**WO 2024/063089 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.09.2022 JP 2022149184**

(71) Applicant: **Morishita Jintan Co., Ltd.
Osaka-shi, Osaka 540-8566 (JP)**

(72) Inventors:
• **NAKAZAWA Asako
Sapporo-shi, Hokkaido 065-0043 (JP)**
• **SOMA Sumie
Sapporo-shi, Hokkaido 065-0043 (JP)**

• **TSUMORI Koichiro
Sapporo-shi, Hokkaido 065-0043 (JP)**
• **KITA Yusuke
Hirakata-shi, Osaka 573-0128 (JP)**
• **NISHIKAWA Takehiro
Hirakata-shi, Osaka 573-0128 (JP)**
• **NAKANO Osami
Hirakata-shi, Osaka 573-0128 (JP)**
• **HASHIMOTO Taku
Hirakata-shi, Osaka 573-0128 (JP)**
• **HATANAKA Hisaaki
Hirakata-shi, Osaka 573-0128 (JP)**

(74) Representative: **Mathys & Squire
The Shard
32 London Bridge Street
London SE1 9SG (GB)**

(54) **CAPSULE TO BE ADDED TO FOOD OR BEVERAGE**

(57)   A capsule to be added to a food or a beverage which has an excellent texture when the capsule is added to a food or a beverage having a high water content, a method for producing the capsule and a food or a beverage containing the capsule are provided.

A capsule to be added to a food or a beverage which is a capsule comprising a content and a capsule shell, wherein the content contains an oily ingredient and a flavor,
the capsule shell contains a shell-forming substrate, and the capsule satisfies the following formula (1) and the following formula (2),

$$1.5 < X < 2.0 \quad \text{formula (1)},$$

wherein X is the integral area (load (N) × period (second)) until reaching a first maximal value when the capsule is broken by applying pressure to the capsule at an 80% load, and

$$0.09 < Y < 0.16 \quad \text{formula (2)},$$

wherein Y is the integral area (load (N) × period (second)) until reaching a first minimal value from the first maximal value when the capsule is broken by applying pressure to the capsule at an 80% load.

FIG. 1(1)

EP 4 570 080 A1

FIG. 1(2)

## Description

TECHNICAL FIELD

The present invention relates to a capsule to be added to a food or a beverage which has an excellent texture when the capsule is added to a food or a beverage having a high water content, such as a beverage, fermented milk, a dessert and a sauce, a method for producing the capsule and a food or a beverage containing the capsule.

BACKGROUND ART

Edible capsules are recently used in various occasions in Japan. Capsules in tablet form are directly taken, and the capsules are also often added to a food.

Here, as foods to which the capsules are added, those shown in Patent Documents 1, 2, 3 and 4 are known. Patent Document 1 describes an edible product containing microcapsules for preventing deterioration or loss of the flavor of the food subjected to heat treatment at a high temperature. Moreover, Patent Document 2 describes microcapsules for a beverage having excellent heat resistance. Patent Document 3 describes a dessert dairy product that contains microcapsules in which an oily aroma ingredient is encapsulated and that can impart well-harmonized flavor of a milk flavor and the flavor of the oily aroma ingredient. Furthermore, Patent Document 4 describes a novel jelly confectionery in which even microcapsules with a small particle size are broken by chewing in the mouth and which achieves development of an unprecedented aroma and a variety of textures and is rich in palatability and preference with various colors and the like. Patent Document 5 describes a method for producing a breakable seamless capsule.

Patent Documents 1 and 2, however, are related to inventions of capsules having excellent heat resistance which can resist high-temperature pasteurization of the food, and the capsules of Patent Document 3 also aim at developing an aroma by chewing as in the invention but are easily broken by chewing and do not affect the original texture of the food to which the capsules are added unlike the invention. The object of the capsules of Patent Document 4 is that the capsules are broken certainly even in a semi-solid jelly (which is hardened and is almost solid), and the capsules do not aim at affecting the texture of the jelly. The capsule of Patent Document 5 is supposed to be used for a smoking device and to be broken with pressure by the fingers, and the capsule is not supposed to be used in a food with a high water content and chewed. Thus, none of the documents mentions the values of the texture of the capsules, the breaking characteristic, the water resistance, the acid resistance and the like.

CITATION LIST

PATENT LITERATURE

Patent Document 1: JP4733040B
Patent Document 2: JP4097415B
Patent Document 3: JPH11-155480A
Patent Document 4: JPH06-59178B
Patent Document 5: JP2019-170383A

SUMMARY OF INVENTION

TECHNICAL PROBLEM

Methods for changing the flavor or the texture of a food or a beverage include addition of a fruit, jam, cereal, honey or chocolate, multi-layer formation or later addition of a sauce and the like, but removal of an ingredient or a sauce which has been once added is difficult, and the flavor or the texture alone of the food or the beverage itself cannot be felt. The change in the flavor or the texture is irreversible.

Here, capsules having an edible shell and the like are used in the field of foods. Typical examples thereof include artificial salmon roes, seamless capsules and the like. By chewing the capsules, a change in the flavor or the texture can be enjoyed. Moreover, the consumers can decide how to chew the capsules by their own will and can enjoy the change in the flavor each bite. When the conventional capsules are added to a food or a beverage, however, the capsules swell with water and have a soft and flabby texture, and thus the original aim of enjoying the texture by chewing cannot be achieved. Moreover, there has been no knowledge regarding the values of a preferable texture after water absorption.

Accordingly, a problem of the invention of the present application is to provide a capsule to be added to a food or a beverage which has an excellent texture when the capsule is added to a food or a beverage having a high water content, a method for producing the capsule and a food or a beverage containing the capsule.

SOLUTION TO PROBLEM

As a result of extensive research to solve the problem, the present inventors have found that a popping plump texture is obtained when physical property values of a capsule to be added to a food or a beverage immersed in a food or a beverage having a high water content, such as fermented milk, are in certain value ranges, and the invention has been thus completed.

The characteristics of a flavor-containing capsule of the invention are as follows.

[1] A capsule to be added to a food or a beverage which is a capsule comprising a content and a capsule shell,

wherein the content contains an oily ingredient and a flavor,
the capsule shell contains a shell-forming substrate, and
the capsule satisfies the following formula (1) and the following formula (2),

$$1.5<X<2.0 \qquad formula\ (1),$$

wherein X is the integral area (load (N) $\times$ period (second)) until reaching a first maximal value when the capsule is broken by applying pressure to the capsule at an 80% load, and

$$0.09<Y<0.16 \qquad formula\ (2),$$

wherein Y is the integral area (load (N) $\times$ period (second)) until reaching a first minimal value from the first maximal value when the capsule is broken by applying pressure to the capsule at an 80% load.

[2] The capsule of [1], wherein the particle size of the capsule is 2.0 to 2.8 mmφ.
[3] The capsule of [1], wherein the slope between the first maximal value and the first minimal value is -30 N/second or less.
[4] The capsule of [1], wherein the first minimal value is 0.9 N or less.
[5] The capsule of [1], wherein a second maximal value is 2.5 N or less.
[6] The capsule of [2], wherein the slope between the first maximal value and the first minimal value is -30 N/second or less.
[7] The capsule of [2], wherein the first minimal value is 0.9 N or less.
[8] The capsule of [2], wherein the second maximal value is 2.5 N or less.
[9] A method for producing the capsule of any of [1] to [8]

which is a method for producing a capsule by a dripping method comprising dripping discharged liquids that are simultaneously discharged from a double nozzle in which an inner nozzle and an outer nozzle are placed concentrically into a cooling liquid
wherein the inner nozzle discharges a capsule content liquid,
the outer nozzle discharges a shell layer liquid,
the capsule content liquid contains the oily ingredient and the flavor, and
the shell layer liquid contains the shell-forming substrate,
wherein the method includes a step of immersing the obtained capsule in a crosslinker liquid.

[10] A food or a beverage containing the capsule of any one of [1] to [8].
[11] The food or the beverage of [10] which has a water content of 60% or more.
[12] The food or the beverage of [10] which has pH 7 or less.

BRIEF DESCRIPTION OF DRAWINGS

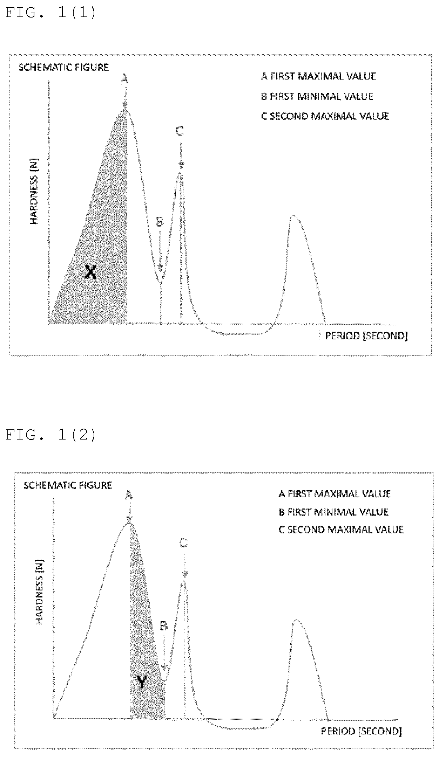

Fig. 1 is composed of graphs each of which represents the change in the load when a capsule was broken by applying pressure to the capsule at an 80% load. Area "X" of Fig. 1(1) represents the integral area, and Area "Y" of Fig. 1(2) represents the integral area.

DESCRIPTION OF EMBODIMENTS

The invention will be explained in detail below. In the present specification, aspects of the invention are separately explained, but the subject matters, the definitions of the terms and the embodiments described in each aspect can be applied to the other aspects.

The particle size of the capsule of the invention is 2.0 to 2.8 mm$\varphi$, preferably 2.3 to 2.8 mm$\varphi$. When the particle size is smaller, there is a high likelihood that the capsule cannot be broken by chewing, and the influence on the texture becomes small, while, when the particle size is larger, the presence in the mouth is too strong, and the texture rather deteriorates.

Moreover, it was found in the invention that the physical property values representing the texture of the capsule can be defined as follows.

When the physical properties of a food are measured, in general, two successive loads are applied to the food with a plunger, and the physical properties of the food are indicated by the maximum load, the cohesiveness (the ratio of the first deformation and the second deformation) and the like. The capsule of the invention, however, breaks with the first load of the plunger. The capsule is already broken when the second load is applied, and only the load corresponding to the shell thickness is calculated. The present inventors have found that, when the data such as the load calculated with the first load are analyzed based on the following views, the physical properties which appropriately represent the popping plump texture of the capsule of the invention can be defined.

The capsule of the invention is produced by a production method which is the so-called dripping method and is produced by treating to achieve desired conditions. The dripping method is a production method using the phenomenon in which a droplet which is dripped from a nozzle into a fluid becomes a globular shape by the surface tension.

Examples of the shell-forming substrate for forming the shell of the capsule of the invention include a mixture of a protein and a water-soluble polyhydric alcohol, a mixture of a protein, a water-soluble polyhydric alcohol and a polysaccharide, a mixture of a polysaccharide and a water-soluble polyhydric alcohol or the like. Examples of the protein include gelatin, collagen and the like. Examples of the water-soluble polyhydric alcohol include sorbitol, mannitol, glycerin, propylene glycol, polyethylene glycol, glucose, fructose, galactose, arabinose, mannose, rhamnose, maltose, raffinose, sucrose, erythritol, maltitol, trehalose, lactose, xylose and the like. Examples of the polysaccharide include agar, gellan gum, xanthan gum, locust bean gum, pectin, psyllium seed gum, guar gum, furcelleran, arabinogalactan, arabinoxylan, alginic acid (salt), carrageenan, gum arabic, (modified) dextrin, (modified) starch, pullulan, carboxymethyl cellulose (salt) and the like. When alginic acid (salt), gellan gum, pectin or carrageenan is used, an alkali metal salt, an alkaline earth metal salt, an ammonium salt or the like may be appropriately added.

To impart acid resistance to the shell, at least one selected from the group consisting of alginic acid (salt), carboxymethyl cellulose (salt), low methoxy pectin and high methoxy pectin is preferably added.

Regarding the capsule of the invention, to obtain desired physical properties resulted in contact with water, it is preferable to conduct at least one surface treatment of cross-linking treatment of the shell of the capsule and coating treatment of the capsule. The cross-linking treatment of the shell is suitable for treatment of the shell containing a protein. For example, cross-linking by chemical reaction using a conventionally known crosslinker or cross-linking by enzymatic reaction can be employed.

Examples of the crosslinker used for cross-linking by chemical reaction include an aldehyde, alum and the like. The aldehyde has a characteristic of cross-linking by forming a Schiff base or an enamine through reaction with a basic moiety other than $\alpha$-amino group in a basic amino acid such as arginine, lysine and histidine. Alum has a characteristic of cross-linking by forming an ionic bond with a carboxyl group other than $\alpha$-carboxyl group in an acidic amino acid such as glutamic acid and aspartic acid. The crosslinkers which can be used in the invention include the following compounds: formaldehyde, acetaldehyde, isobutanal, ethylvanillin, citronellal, cinnamaldehyde, decylaldehyde, vanillylaldehyde, valeraldehyde, hydroxycitronellal, butyraldehyde, propionaldehyde, L-perillaldehyde, benzaldehyde, trans-2-pentenal, 2-methylbutyraldehyde, trans-2-methyl-2-butenal, 3-methyl-2-butenal, potassium alum and the like. When the shell is cross-linked with such a crosslinker, for example, after preparing a wet capsule by the above method, the capsule is cleaned with water sufficiently and added to an aqueous solution containing the crosslinker, and the shell is cross-linked.

The amount of the crosslinker used and the period for acting depend also on the crosslinker. Specifically, the obtained capsule is added to an aqueous solution containing 0.1 to 10%, preferably 0.5 to 2% crosslinker to bring into contact for 10 to 300 seconds. In general, the contact is conducted effectively by stirring. The mass of the aqueous solution containing the crosslinker is preferably 0.1 to 100 times the capsule mass. After cross-linking the shell, by cleaning with water sufficiently to remove the aqueous solution containing the crosslinker, the capsule is obtained. The water content contained in the shell may be appropriately removed by drying. In this manner, cross-linking by chemical reaction is conducted.

Example of the enzyme used for cross-linking by enzymatic reaction include a transglutaminase and the like. The transglutaminase has a function of achieving cross-linking by forming a peptide bond with a free amino group and a free carboxyl group. When a transglutaminase is used for cross-linking, an uncross-linked capsule obtained by the above method is added to an aqueous solution containing 0.5 to 10%, preferably 0.5 to 2% enzyme to bring into contact for 1 to 300 minutes.

In general, stirring is effective for cross-linking. The mass of the aqueous solution containing the enzyme as the crosslinker is preferably 0.1 to 100 times the capsule mass. By cleaning the capsule with water, a cross-linked capsule is obtained. The water content contained in the shell may be appropriately removed by drying.

In each of the treatments above, the degree of cross-linking can be controlled by adjusting the pH of the crosslinker and the temperature, and a desired texture can be obtained.

The capsule of the invention comprises two layers, namely a content and a shell, and the physical properties of the capsule are indicated by two maximal values of stress (see Fig. 1). Here, the "first maximal value" means the hardness of the food and is the first stress (N) observed when a first load is applied to the food with a plunger. The "second maximal value" is the second stress (N) observed when the first load is applied to the food with the plunger. The first minimal value is the stress (N) between the first maximal value and the second maximal value and is considered to be generated through the first-stage rupture of the capsule. Here, the stresses (N) in the measurement are the values measured with a texture analyzer (type: TX-XT Plus, manufactured by EKO INSTRUMENTS CO., LTD.) at an 80% load. When the distance between the point where the plunger has detected the load and the sample stage is regarded as 100%, the 80% load is the state in which the plunger is pushed into until the distance becomes 20%.

The content contained in the capsule of the invention can be appropriately selected depending on the food or the beverage to which the capsule is added, but for example, a honey flavoring, a mint flavoring, lemon oil, orange oil or the like can be preferably used.

The food or the beverage to which the capsule of the invention is added is a beverage, fermented milk, a dessert, a sauce or the like, and a semi-solid food can also be used when the physical properties after the addition of the capsule are in the numerical ranges of the invention. "The food or the beverage such as a beverage and fermented milk" related to the invention is a food or a beverage preferably having a water content of 60% or more and is a food or a beverage further preferably having pH 7 or less.

From the results of sensory tests by the present inventors, it was found out that it is important that the capsule satisfies the following formula (1) and the following formula (2) to obtain a "popping plump" texture upon chewing.

$$1.5 < X < 2.0 \qquad \text{(Formula 1)}$$

Here, X is the integral area (load (N) × period (second)) until reaching the first maximal value which is determined from a curve drawn by plotting the change in the load observed when the capsule is broken by applying pressure to the capsule at an 80% load, where the vertical axis shows the load (N), and the horizontal axis shows the period (second).

$$0.09 < Y < 0.16 \qquad \text{(Formula 2)}$$

Here, Y is the integral area (load (N) × period (second)) until reaching the first minimal value from the first maximal value which is determined from a curve drawn by plotting the change in the load observed when the capsule is broken by applying pressure to the capsule at an 80% load, where the vertical axis shows the load (N), and the horizontal axis shows the period (second).

Furthermore, the slope between the first maximal value and the first minimal value, which represents the sudden rupture of the capsule, is desirably -30 N/second or less, preferably -40 N/second or less, because the popping plump texture of the capsule can express when the content spouts out of the capsule. Moreover, because the first minimal value generated by the rupture of the capsule can represent the completion of spouting of the content of the capsule, the first minimal value is desirably 0.9 N or less, and the second maximal value, which represents the hardness of the shell itself of the capsule, represents that almost all of the content has come out of the capsule and is desirably 2.5 N or less, preferably 2.3 N or less.

EXAMPLES

The invention will be explained in further detail below referring to Examples, but the invention is not limited by the Examples. Unless otherwise explained, "%" in the present specification indicates weight%, and the "parts" in the present specification indicate the parts by weight.

[Production Examples of Capsules]

The flavor capsules of the invention were produced as follows, and various types of experiment were conducted using the produced flavor capsules.

Seventy-five parts of gelatin, 20 parts of glycerin and 5 parts of low methoxy pectin were mixed in 400 parts of distilled water and dissolved at 60°C, and the solution was defoamed by leaving to stand still. A capsule shell layer liquid was thus produced.

The capsule shell layer liquid and a capsule content liquid obtained by mixing 36 parts of lemon flavor, 12 parts of l-menthol, 250.5 parts of a medium-chain triglyceride and 1.5 parts of an oil-soluble colorant were used, introduced into a capsule production apparatus and discharged into a flowing medium-chain triglyceride (10°C) using a concentric double nozzle while the temperature of the capsule content liquid was maintained at 20°C and the temperature of the capsule shell layer liquid was maintained at 60°C. Capsules were thus produced. Subsequently, the capsules were defatted, added to the same weight of a 0.3% aqueous transglutaminase solution as a reaction liquid and stirred for two hours. Then, the aqueous solution was dehydrated and subjected to drying treatment (25°C, a humidity of 50% RH or less), and thus flavor capsules having a particle size of 2.3 mm were obtained.

Production Examples 2-5

Flavor capsules were prepared in the same manner as in Production Example 1 except that the conditions of Production Example 1 were changed to the compositions described in Table 1.

[Table 1]

|  |  | Production Example 1 | Production Example 2 | Production Example 3 | Production Example 4 | Production Example 5 |
|---|---|---|---|---|---|---|
| Shell | Gelatin | 75parts | 75parts | 75parts | 75parts | 70parts |
|  | Low methoxy pectin | 5parts | 5parts | 5parts | 5parts | 10parts |
|  | Glycerin | 20parts | 20parts | 20parts | 20parts | 20parts |
|  | Temperature | 60°C | 60°C | 60°C | 60°C | 60°C |
| Content liquid | Lemon flavor | 36parts | 27.9parts | 27.9parts | 27.9parts | 27.9parts |
|  | 1-menthol | 12parts | 9.4parts | 9.4parts | 9.4parts | 9.4parts |
|  | Medium-chain triglyceride | 250.5parts | 194.9parts | 194.9parts | 194.9parts | 194.9parts |
|  | Colorant | 1.5parts | 1.2parts | 1.2parts | 1.2parts | 1.2parts |
|  | Temperature | 25°C | 25°C | 25°C | 25°C | 25°C |
| Reaction liquid | Transglutaminase concentration [%] | 0.3% | 0.3% | 0.5% | 1.0% | 1.0% |
|  | Temperature | 15°C | 15°C | 15°C | 15°C | 15°C |

[Measurement of Physical Properties of Capsules]

The flavor capsules produced in "Production Examples of Capsules" above were measured using a texture analyzer (type TX-XT Plus, manufactured by EKO INSTRUMENTS CO., LTD.) with the parameters shown below.

<Parameters of Texture Analyzer>

| Penetration rate | 0.5 mm/second |
| Contact detection (trigger force) | 0.02 N |
| Distortion rate | 80% load |
| Cycle | two |

(Comparative Example 1)

An aqueous solution having a fat content of 1.9% which was obtained by dissolving 11% defatted milk powder, 0.5% milk protein, 7% sugar and 3.7% cream in water was heated to 80°C, then homogenized with a homogenizer at a homogenization pressure of 18 MPa, pasteurized with a plate-type pasteurizer at 93°C for six minutes and then cooled to 45°C. Then, a lactic acid bacterium starter (a mixed starter of *Lactobacillus bulgaricus* and *Streptococcus thermophilus*) was added and mixed. The mixture was fermented in a stainless container at 43°C, and when the pH reached 4.6, the curd was crushed with a sharing valve and cooled to 10°C with a plate-type cooler to stop the fermentation. Crushed fermented milk (yogurt) was thus obtained.

The flavor capsules having a size of 2.3 mm described in Production Example 1 were immersed in the crushed yogurt for five days, and flavor capsule-containing fermented milk was thus obtained.

The flavor capsules were taken out of the fermented milk and cleaned with distilled water at 10°C, and the physical properties of the obtained capsules were measured. The results are shown in Table 2 below.

(Comparative Example 2)

Crushed fermented milk (yogurt) was obtained in the same manner as in Comparative Example 1. The flavor capsules described in Production Example 2 were immersed in the crushed yogurt for five days, and flavor capsule-containing fermented milk was thus obtained.

The flavor capsules were taken out of the fermented milk and cleaned with distilled water at 10°C, and the physical properties of the obtained capsules were measured. The results are shown in Table 2 below.

(Examples 1 to 3)

Crushed fermented milk (yogurt) was obtained in the same manner as in Comparative Example 1. The flavor capsules described in Production Examples 3 to 5 were immersed in the crushed fermented milk for five days, and flavor capsule-containing fermented milks were thus obtained.

The flavor capsules were taken out of the fermented milks and cleaned with distilled water at 10°C, and the physical properties of the obtained capsules were measured. The results are shown in Table 2 below.

Regarding the Comparative Example products 1 and 2 and the Example products 1 to 3, sensory evaluation was conducted on the fifth day of yogurt immersion, and it was determined whether the capsules had a popping plump texture.

Five trained in-house panelists conducted the evaluation, and the evaluation criteria of the texture are as follows.

<Evaluation Criteria>

It was determined whether it was "felt moderately" or "felt slightly or not felt" that the capsules had a popping plump texture.

<How to Combine Evaluations of Five Panelists>

◎: Four or five panelists felt a popping plump texture moderately.
○: Two or three panelists felt a popping plump texture moderately.
×: Other than above.

The results of the evaluation of the Comparative Example products 1 and 2 and the Example products 1 to 3 are shown in Table 2 below.

[Table 2]

|  | Integral area up to A [N·second] | Integral area between A and B [N·second] | Slope until reaching B from A [N/second] | B hardness [N] | C hardness [N] | Sensory evaluation |
|---|---|---|---|---|---|---|
| Comparative Example 1 | 1.1 | 0.08 | -229 | 1.0 | 2.6 | × |
| Comparative Example 2 | 1.0 | 0.08 | -16.6 | 1.0 | 3.0 | × |
| Example 1 | 1.8 | 0.12 | -44.6 | 0.8 | 2.1 | ◎ |
| Example 2 | 1.9 | 0.11 | -47.4 | 0.3 | 1.5 | ◎ |

(continued)

|  | Integral area up to A [N·second] | Integral area between A and B [N·second] | Slope until reaching B from A [N/second] | B hardness [N] | C hardness [N] | Sensory evaluation |
|---|---|---|---|---|---|---|
| Example 3 | 1.8 | 0.12 | -52.8 | 0.4 | 1.7 | ◎ |
| A: First maximal value, B: First minimal value, C: Second maximal value | | | | | | |

The Example products 1 to 3 had a superior texture to those of the Comparative Example products 1 and 2 on the fifth day of immersion.

[Particle Sizes of Capsules and Evaluation of Texture]

Crushed fermented milk (yogurt) was obtained in the same manner as in Comparative Example 1. Flavor capsules having a particle size of 1.5, 2.0, 2.3, 2.5, 2.8 or 5.0 mm were produced with the composition described in Production Example 5 and immersed separately in the crushed yogurt for five days, and flavor capsule-containing yogurts were thus obtained.

Sensory evaluation to determine whether the obtained yogurts had a popping plump texture was conducted. The results are shown in Table 3. Five trained in-house panelists conducted the evaluation, and the evaluation criteria of the texture are as follows.

<Evaluation Criteria>

It was determined whether it was "felt moderately" or "felt slightly or not felt" that the capsules had a popping plump texture.

<How to Combine Evaluations of Five Panelists>

◎: Four or five panelists felt a popping plump texture moderately.
○: Two or three panelists felt a popping plump texture moderately.
×: Other than above.

[Table 3]

| capsule particle size [mm] | Evaluation |
|---|---|
| 1.5 | × |
| 2.0 | ○ |
| 2.3 | ◎ |
| 2.5 | ◎ |
| 2.8 | ○ |
| 5.0 | × |

It was found that a particle size of 2.0 to 2.8 mm is preferable as the size with which a popping plump texture can be felt in the oral cavity.

From the above, regarding fermented milk containing the flavor capsule of the invention, yogurts containing flavor capsules could be obtained by adjusting the integral area until the first maximal value of the flavor capsules to 1.5 N·second to 2.0 N·second, preferably 1.6 N·second to 1.9 N·second, the integral area between the first maximal value and the first minimal value to 0.09 N·second to 0.16 N·second, preferably 0.11 N·second to 0.16 N·second, the slope between the first maximal value and the first minimal value to -30 N/second or less, preferably -40 N/second or less, the hardness of the first minimal value to 0.9 N or less, the second maximal value to 2.5 N or less, preferably 2.3 N or less, and the particle size to 2.0 to 2.8 mm, the flavor capsules having a popping plump texture upon chewing.

**Claims**

1.  A capsule to be added to a food or a beverage which is a capsule comprising a content and a capsule shell,

    wherein the content contains an oily ingredient and a flavor,
    the capsule shell contains a shell-forming substrate, and
    the capsule satisfies the following formula (1) and the following formula (2),

    $$1.5 < X < 2.0 \quad \text{formula (1),}$$

    wherein X is the integral area (load (N) × period (second)) until reaching a first maximal value when the capsule is broken by applying pressure to the capsule at an 80% load, and

    $$0.09 < Y < 0.16 \quad \text{formula (2),}$$

    wherein Y is the integral area (load (N) × period (second)) until reaching a first minimal value from the first maximal value when the capsule is broken by applying pressure to the capsule at an 80% load.

2.  The capsule according to claim 1, wherein the particle size of the capsule is 2.0 to 2.8 mmφ.

3.  The capsule according to claim 1, wherein the slope between the first maximal value and the first minimal value is -30 N/second or less.

4.  The capsule according to claim 1, wherein the first minimal value is 0.9 N or less.

5.  The capsule according to claim 1, wherein a second maximal value is 2.5 N or less.

6.  The capsule according to claim 2, wherein the slope between the first maximal value and the first minimal value is -30 N/second or less.

7.  The capsule according to claim 2, wherein the first minimal value is 0.9 N or less.

8.  The capsule according to claim 2, wherein the second maximal value is 2.5 N or less.

9.  A method for producing the capsule according to any one of claims 1 to 8

    which is a method for producing a capsule by a dripping method comprising dripping discharged liquids that are simultaneously discharged from a double nozzle, in which an inner nozzle and an outer nozzle are placed concentrically, into a cooling liquid,
    wherein the inner nozzle discharges a capsule content liquid,
    the outer nozzle discharges a shell layer liquid, the capsule content liquid contains the oily ingredient and the flavor, and
    the shell layer liquid contains the shell-forming substrate,
    wherein the method includes a step of immersing the obtained capsule in a crosslinker liquid.

10. A food or a beverage containing the capsule according to any one of claims 1 to 8.

11. The food or the beverage according to claim 10 which has a water content of 60% or more.

12. The food or the beverage according to claim 10 which has pH 7 or less.

FIG. 1(1)

FIG. 1(2)

## INTERNATIONAL SEARCH REPORT

| International application No. |
| --- |
| **PCT/JP2023/034074** |

| A. | CLASSIFICATION OF SUBJECT MATTER |
| --- | --- |

*A23L 5/00*(2016.01)i; *A23C 9/123*(2006.01)i
FI:    A23L5/00 C; A23C9/123

According to International Patent Classification (IPC) or to both national classification and IPC

| B. | FIELDS SEARCHED |
| --- | --- |

Minimum documentation searched (classification system followed by classification symbols)

A23L5/00; A23C9/123

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 10-191950 A (RIKEN VITAMIN CO LTD) 28 July 1998 (1998-07-28)<br>claim 1, paragraphs [0009], [0020], [0022]-[0024] | 1-12 |
| A | JP 64-23860 A (SUNTORY LTD) 26 January 1989 (1989-01-26)<br>entire text | 1-12 |
| A | JP 2022-114451 A (TOTTORI INSTITUTE OF INDUSTRIAL TECH) 05 August 2022<br>(2022-08-05)<br>entire text | 1-12 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2023** | **21 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034074**

| Patent document cited in search report | | | Publication date (day/month/year) | Patent family member(s) | Publication date (day/month/year) |
|---|---|---|---|---|---|
| JP | 10-191950 | A | 28 July 1998 | (Family: none) | |
| JP | 64-23860 | A | 26 January 1989 | (Family: none) | |
| JP | 2022-114451 | A | 05 August 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4733040 B
- JP 4097415 B
- JP H11155480 A
- JP H0659178 B
- JP 2019170383 A